# EUROPEAN PATENT APPLICATION

(11) **EP 4 316 752 A1**
(43) Date of publication of application: **07.02.2024**
(21) Application number: 22779638.0
(22) Date of filing: 18.02.2022
(51) Int. Cl.: B25J 15/08

(54) **END EFFECTOR AND END EFFECTOR SET**

(30) Priority: 30.03.2021 JP 2021057886
(71) Applicant: Panasonic Intellectual Property Management Co., Ltd., Osaka 571-0057 (JP)
(72) Inventor: KIKUCHI, Takeshi, Kadoma-shi, Osaka 571-0057 (JP); KOUNO, Kazunori, Kadoma-shi, Osaka 571-0057 (JP); MATSUYAMA, Yoshinari, Kadoma-shi, Osaka 571-0057 (JP); ISOBE, Yuzuka, Kadoma-shi, Osaka 571-0057 (JP)
(74) Representative: Eisenführ Speiser
(86) International application number: PCT/JP2022/006727
(87) International publication number: WO 2022/209411

(57) **Abstract**

An end effector includes: one or more hole plates each including a plurality of holes; a cushion material to be used together with the one or more hole plates; a plurality of pins including a plurality of inner pins and a plurality of outer pins disposed outside the plurality of inner pins; and a force application portion that applies an inward force to the plurality of outer pins. The plurality of inner pins pass through the plurality of holes and the cushion material and are movable within a first distance in a pass-through direction of the plurality of holes with respect to the one or more hole plates.

## Description

### TECHNICAL FIELD

The present disclosure relates to an end effector and an end effector set.

### BACKGROUND ART

PTL 1 describes a robot hand including an attracting portion such as an electromagnet that attracts a workpiece and a shape-conforming portion including six or more pins that are lowered by own weight of the pins to conform the shape of the workpiece. The robot hand fixes the ascending or descending of the pins as necessary and fixes the workpiece using a support hook that supports the workpiece from below as necessary when, for example, the workpiece has a large weight.

### Citation List

### Patent Literature

PTL 1: Unexamined Japanese Patent Publication No. H10-264068

### SUMMARY OF THE INVENTION

The present disclosure has been devised in view of the above-mentioned conventional situation and aims at providing an end effector that can support a target object (for example, a workpiece).

An end effector according to one aspect of the present disclosure has: one or more hole plates each including a plurality of holes; a cushion material to be used together with the one or more hole plates; a plurality of pins including a plurality of inner pins and a plurality of outer pins disposed outside the plurality of inner pins; and a force application portion that applies an inward force to the plurality of outer pins. The plurality of inner pins pass through the plurality of holes and the cushion material and are movable within a first distance in a pass-through direction of the plurality of holes with respect to the one or more hole plates.

According to the present disclosure, it is possible to provide an end effector capable of supporting a target object such as a workpiece.

### BRIEF DESCRIPTION OF THE DRAWINGS

Fig. 1 is a longitudinal sectional view illustrating an example of a state of an end effector in a standby stage.
Fig. 2 is a longitudinal sectional view illustrating an example of a state of the end effector in a tracing stage.
Fig. 3 is a longitudinal sectional view illustrating an example of a state of the end effector in a support stage.
Fig. 4 is an enlarged view of a portion including a projection in an example of a configuration of the end effector.
Fig. 5 is a longitudinal sectional view illustrating an example of a state of the end effector in a push-out stage.
Fig. 6 is a conceptual diagram illustrating a case where the end effector supports a target object in the gravity direction.
Fig. 7 is a longitudinal sectional view illustrating an example of a state of the end effector in a support stage.
Fig. 8 is a conceptual diagram illustrating a case where the end effector supports a target object in a horizontal direction, corresponding to Fig. 7.
Fig. 9 is a perspective view illustrating an example of a configuration of an end effector according to a second exemplary embodiment of the present disclosure.
Fig. 10 is a top view illustrating an example of the configuration of the end effector according to the second exemplary embodiment of the present disclosure.
Fig. 11 is a front view illustrating an example of the configuration of the end effector according to the second exemplary embodiment of the present disclosure.
Fig. 12 is a lateral view illustrating an example of the configuration of the end effector according to the second exemplary embodiment of the present disclosure.
Fig. 13 is a bottom view illustrating an example of the configuration of the end effector according to the second exemplary embodiment of the present disclosure.
Fig. 14 is a perspective view illustrating an inner configuration of the end effector according to the second exemplary embodiment of the present disclosure.
Fig. 15 is an exploded perspective view illustrating the inner configuration of the end effector according to the second exemplary embodiment of the present disclosure.
Fig. 16 is a cross-sectional view illustrating the inner configuration of the end effector according to the second exemplary embodiment of the present disclosure.
Fig. 17 is a conceptual diagram illustrating a mounting example of a hole plate.
Fig. 18 is a comparison view of an outer pin, an inner pin, and a sleeve according to the second exemplary embodiment of the present disclosure.
Fig. 19 is a conceptual diagram illustrating a flow until the end effector according to the second exemplary embodiment of the present disclosure supports a target object.
Fig. 20 is a conceptual diagram illustrating a flow until the end effector according to the second exemplary embodiment of the present disclosure releases the supported target object and returns to an initial state.
Fig. 21 is a longitudinal sectional view illustrating an example of the end effector in a support state.
Fig. 22 is a conceptual diagram illustrating a case where the end effector supports a target object in the horizontal direction, corresponding to Fig. 21.
Fig. 23 is a conceptual diagram illustrating an example of the shape of the inner pin in the vicinity of a first end.
Fig. 24 is a conceptual view of the inner pin illustrated in Fig. 23 as viewed in a direction from the first end to a second end.
Fig. 25 is a view illustrating an example of anti-slip processing performed on a second region of the inner pin.
Fig. 26 is a block diagram illustrating an example of a hardware configuration of a control system used together with the end effector according to each exemplary embodiment of the present disclosure.
Fig. 27 is a longitudinal sectional view illustrating an example of a configuration of an end effector according to a modification.
Fig. 28 is a longitudinal sectional view illustrating an example of a tracing stage of a switching adapter by the end effector according to the modification.
Fig. 29 is a longitudinal sectional view illustrating an example of a support stage of the switching adapter by the end effector according to the modification.

### DESCRIPTION OF EMBODIMENT

Hereinafter, exemplary embodiments of the present disclosure will be described in detail with reference to the accompanying drawings as appropriate. However, a description detailed more than necessary may be omitted. For example, a detailed description of well-known matters and a duplicate description of substantially identical configurations may be omitted. This is to avoid an unnecessarily redundancy of the following description and to facilitate understanding of a person skilled in the art. Note that the accompanying drawings and the following description are provided to enable those skilled in the art to fully understand the present disclosure, and are not intended to limit the subject matters set forth in the claims.

### (First exemplary embodiment)

In the present disclosure, the same direction as the gravity direction is referred to as a downward direction, and the direction opposite to the gravity direction is referred to as an upward direction. In the present disclosure, a cross section parallel to the gravity direction is described as a longitudinal cross section, and a cross section perpendicular to the gravity direction is described as a transverse cross section.

Robot devices used in factories and the like can perform various kinds of work with end effector 2 being attached to a robot arm (not illustrated). For example, the robot arm picks target object Wk such as a workpiece flowing through a production line in a factory using the end effector and works to convey the target object to a destination. Target object Wk may be a relatively small object such as a screw, a nut, or a washer, or may be a relatively large object (for example, a housing) including a rib or a boss.

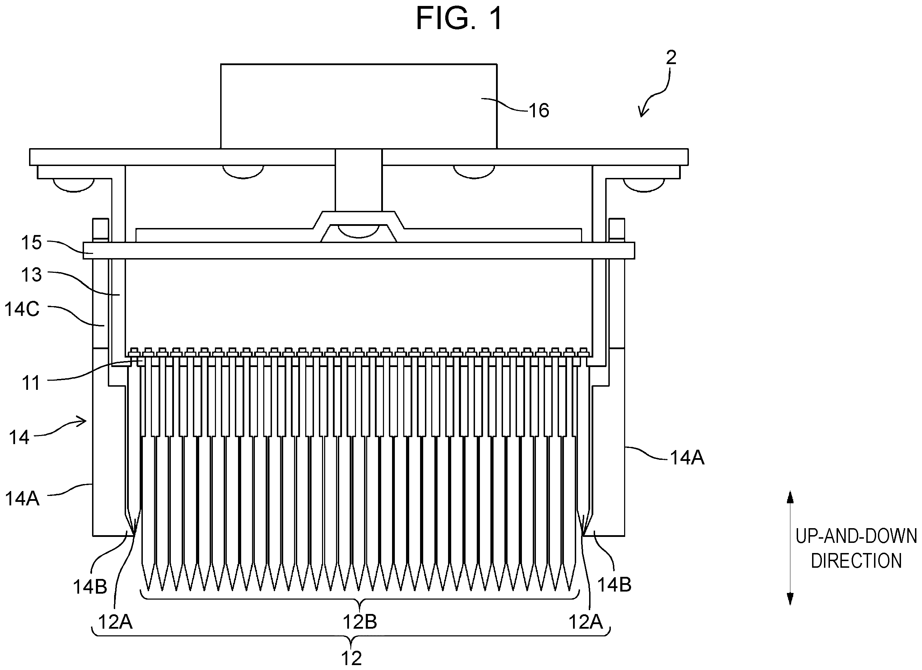

Fig. 1 is a longitudinal sectional view illustrating an example of a state of end effector 2 in a standby stage. Fig. 1 illustrates the state of end effector 2 connected to the robot arm at a stage (standby stage) before starting picking target object Wk.

End effector 2 includes hole plate 11, a plurality of pins 12, base 13, holder 14, movable plate 15, and actuator 16.

Hole plate 11 is a plate provided with a plurality of through holes. The thickness of hole plate 11 may be, for example, 0.1 mm to 2 mm inclusive. However, this thickness is not restrictive. Furthermore, hole plate 11 may be integrated with base 13.

Each pin 12 has an elongated rod shape and is inserted into each hole of hole plate 11. The transverse cross-sectional shape of pin 12 and the shape of the hole may be circular, which is not restrictive. The diameter of pin 12 may be, for example, between 0.1 mm and 2 mm inclusive, and is slightly smaller than the diameter of the hole. The material of pin 12 may be metals. However, the material of pin 12 is not limited to metals, and may be, for example, resins.

Pin 12 may have, at its upper end, a head having a diameter larger than the diameter of the hole provided in hole plate 11. The head serves as a stopper, and pin 12 is hung from hole plate 11 by its own weight. In addition, since the diameter of pin 12 is slightly smaller than the diameter of the hole, pin 12 can move upward when being pushed up from below. In this case, the thickness of hole plate 11 is sufficiently short with respect to the length of pin 12.

The tip end portion of pin 12 is tapered to be narrower toward the tip end. That is, the tip end of pin 12 has a pointed shape like a needle. Accordingly, as will be described later, it is possible to support target objects Wk of various shapes.

Pin 12 has a maximum movable radius (for example, a radius of the bottom surface of a cone formed by the movable range having the abovementioned hole as a vertex) due to the backlash of pin 12 within a distance from a center of pin 12 to a center of adjacent pin 12. This is because the force transmission efficiency decreases when pin 12 moves beyond the center of adjacent pin 12. Pins 12 include outer pin 12A and inner pin 12B.

Outer pin 12A may be shorter than inner pin 12B. As a result, as will be described later, a force applied inward to outer pin 12A (that is, a force toward target object Wk) is transmitted not to the tip end of inner pin 12B, but to a lateral surface of inner pin 12B, thereby increasing a force of supporting target object Wk.

Base 13 has a tubular shape. Base 13 is connected to the robot arm. Besides, hole plate 11 is fixed to base 13. The plurality of pins 12 hanging from hole plate 11 project downward in the drawing from an end surface of base 13.

Holder 14 has a tubular shape and surrounds further outside of outer pin 12A. Holder 14 includes lateral surface portion 14A forming a surface substantially parallel to pin 12 and projection 14B projecting toward the inside of the tube. Projection 14B is one example of the force application portion.

Movable plate 15 is provided to face hole plate 11 and is movable in a direction closer to or away from hole plate 11. The movement direction is an up-and-down direction in the drawing. Movable plate 15 is coupled to slit 14C provided in lateral surface portion 14A of holder 14. When movable plate 15 moves in the direction away from hole plate 11, movable plate 15 comes into contact with the end portion of slit 14C. When movable plate 15 further moves, movable plate 15 moves holder 14 in a direction (upward in the drawing) from the tip end of pin 12 toward hole plate 11. Furthermore, movable plate 15 moves in a direction closer to hole plate 11, and pushes and moves inner pin 12B projecting from hole plate 11 toward the tip end of inner pin 12B.

Actuator 16 is a device that moves movable plate 15 in a direction closer to hole plate 11 or a direction away from hole plate 11, or stops the movement. Actuator 16 may be, for example, an air actuator, and moves movable plate 15 by sucking and discharging air.

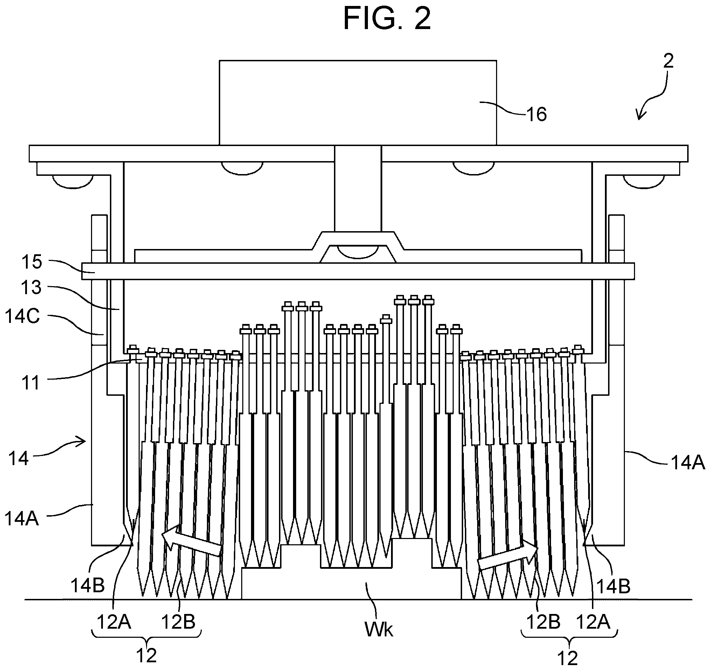

Fig. 2 is a longitudinal sectional view illustrating an example of a state of end effector 2 in a tracing stage.

When a stage shifts from the standby stage to the tracing stage, the robot arm moves end effector 2 downward toward placed target object Wk and presses the tip end of pin 12 against target object Wk. That is, the shape of target object Wk is traced by the plurality of pins 12. In this tracing, since pin 12 which has come into contact with the surface of target object Wk cannot move downward any more, the upper portion of pin 12 projects above hole plate 11. For example, the robot arm moves end effector 2 downward until at least some inner pins 12B among the plurality of inner pins 12B comes into contact with the placement surface of target object Wk. That is, inner pin 12B slides along the hole of hole plate 11, end effector 2 can trace the shape of target object Wk with the plurality of inner pins 12B. Note that end effector 2 may be moved downward manually or automatically.

End effector 2 may generate vibration in the tracing stage. Since this vibration can move, downward, pin 12 that has been caught halfway and has not been completely moved downward, more accurate tracing can be performed. Therefore, in the support stage described later, the transmission efficiency of the force between adjacent pins 12 and the transmission efficiency of the force to target object Wk can be improved.

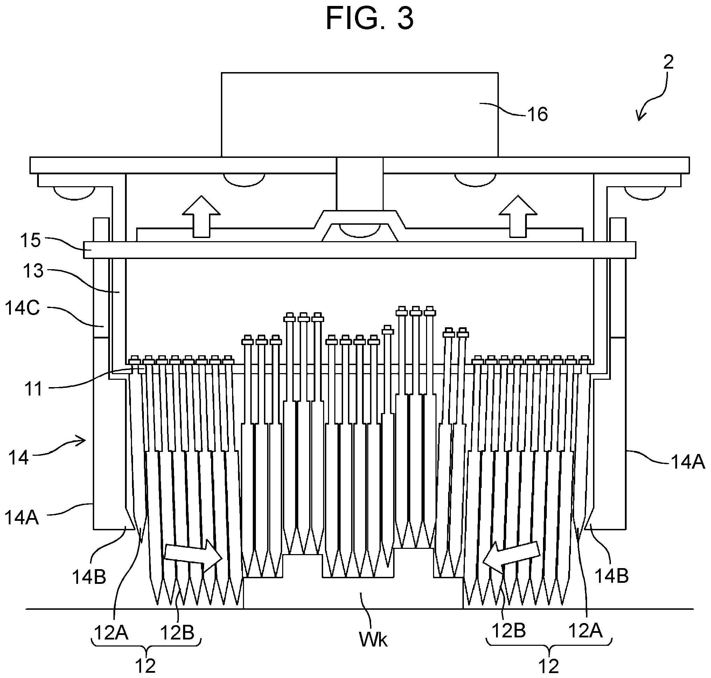

Fig. 3 is a longitudinal sectional view illustrating an example of a state of end effector 2 in a support stage.

When a stage shifts from the tracing stage to the supporting stage, actuator 16 moves movable plate 15 in a direction away from hole plate 11 (see the upward arrows from movable plate 15). As a result, holder 14 coupled to movable plate 15 moves to follow movable plate 15, and projection 14B of holder 14 comes into contact with the lateral surface of outer pins 12A to apply an inward force to outer pins 12A (that is, a force toward target object Wk). Due to this inward force, as outer pins 12A fall inward, inner pins 12B accordingly fall inward sequentially (see the leftward and rightward arrows on inner pins 12B), and inner pins 12B coming into contact with target object Wk are finally pressed against the lateral surface of target object Wk. The plurality of inner pins 12B coming into contact with target object Wk apply the lateral pressure to target object Wk, thereby supporting target object Wk. Note that the abovementioned mechanism that applies an inward force (that is, a force toward target object Wk) to outer pins 12A or projection 14B is one example of the force application portion. However, the force application portion may be constituted by means other than projection 14B.

The robot arm conveys target object Wk to a destination with end effector 2 supporting target object Wk in this manner.

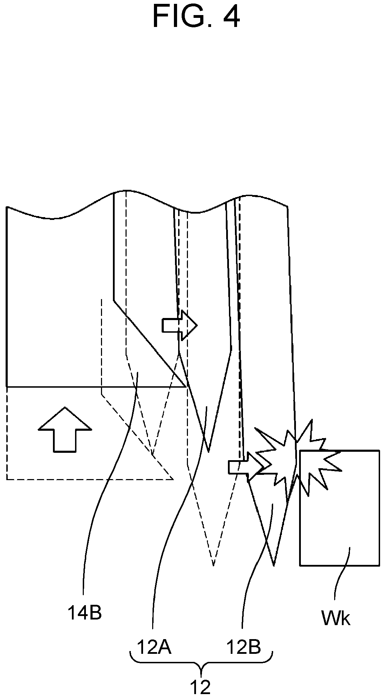

Fig. 4 is an enlarged view of a portion including projection 14B in an example of a configuration of end effector 2. As illustrated in Fig. 4, when holder 14 is moving, projection 14B comes into contact with outer pins 12A and falls inward. Inner pins 12B fall inward by being pushed by outer pins 12A, and the lateral surface portions of inner pins 12B come into contact with target object Wk from the lateral direction illustrated in the drawing. That is, a lateral force is applied to target object Wk. It becomes possible to support target object Wk in such a manner as to grasp target object Wk by also applying a lateral force to target object Wk from the opposite side such that the forces face each other.

As described above, the tip end portion of pin 12 may be tapered so as to become narrower toward the tip end. As a result, as compared with a case where the end portion of each pin 12 has a simple rod shape, the lateral surface portions of inner pins 12B that have fallen inward come into contact with target object Wk more smoothly. Therefore, a lateral force is easily applied to target object Wk, and the support of target object Wk is stabilized.

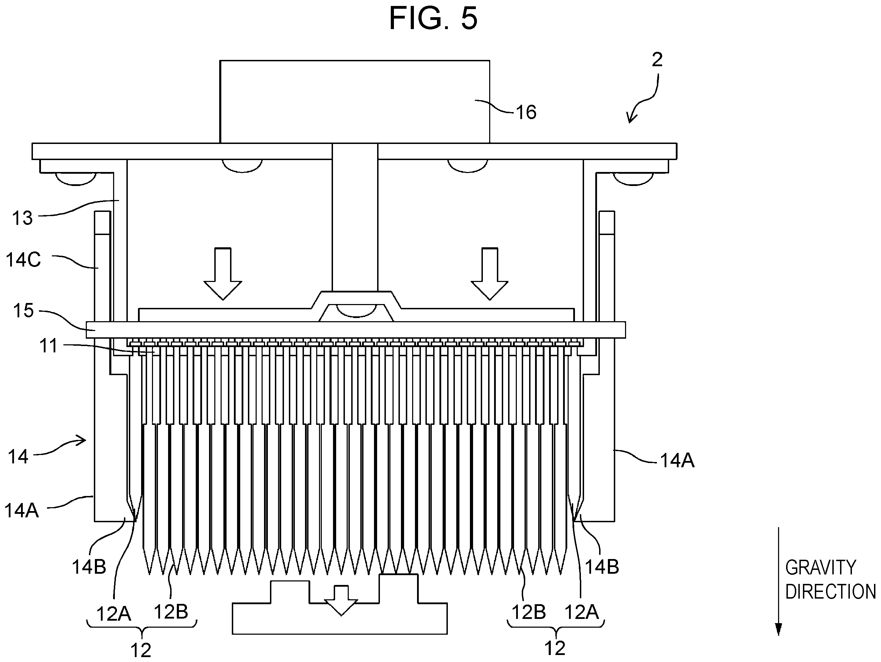

Fig. 5 is a longitudinal sectional view illustrating an example of a state of end effector 2 in the push-out stage.

When a stage shifts from the support stage to the push-out stage, actuator 16 moves (downward in the drawing) movable plate 15 to a position closest to the hole plate 11. As a result, holder 14 coupled to movable plate 15 moves to follow movable plate 15, and projection 14B of holder 14 no longer comes into contact with outer pins 12A. Consequently, the inward force applied to outer pins 12A is released. Accordingly, since the inward force of inner pins 12B in contact with target object Wk is also released, no lateral force is applied to target object Wk and target object Wk is no longer supported.

In addition, inner pins 12B that project from hole plate 11 are pushed out in the tip end direction by the movement of movable plate 15. Target object Wk is also pushed out by inner pins 12B which have been pushed out. Pushed target object Wk falls, for example, into a container or the like provided in the next process on the production line.

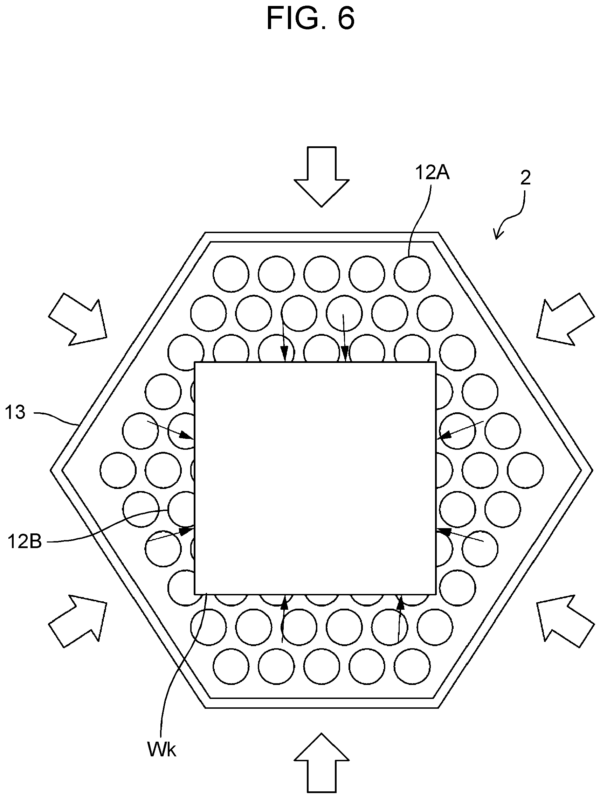

Fig. 6 is a conceptual diagram illustrating a case where the end effector 2 supports target object Wk in the gravity direction. Fig. 6 is a view of end effector 2 (see Fig. 3) in the support stage as viewed in a direction from target object Wk toward end effector 2. When end effector 2 supports target object Wk placed on a horizontal workbench or the like from above, it is possible to support target object Wk appropriately with the lateral pressure of inner pin 12B as described above with reference to Fig. 3.

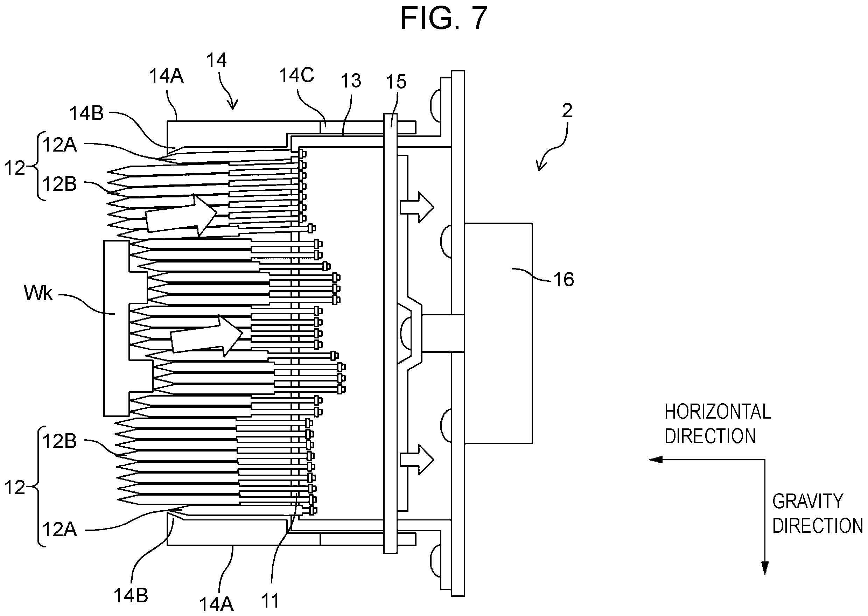

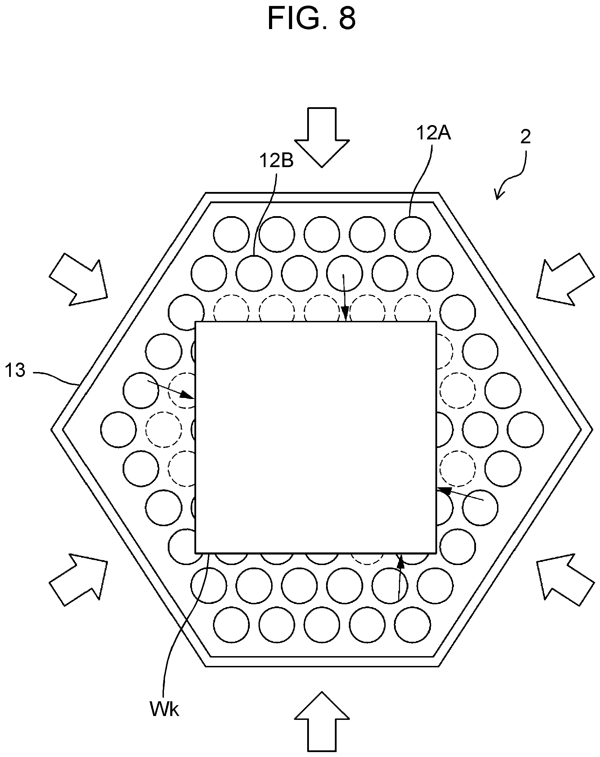

Fig. 7 is a longitudinal sectional view illustrating an example of a state of end effector 2 in the support stage. Fig. 8 is a conceptual diagram illustrating a case where end effector 2 supports target object Wk in the horizontal direction, corresponding to Fig. 7.

Fig. 8 is a view of end effector 2 in Fig. 7 as viewed in a direction from target object Wk toward end effector 2. Since the direction of the own weight applied to outer pins 12A and inner pins 12B is different from the direction in which pins 12 extend, inner pins 12B are retracted due to a force other than the contact with target object Wk (see the arrows in the upper right direction in Fig. 7). Then, as indicated by broken line circles in Fig. 8, the number of inner pins 12B supporting target object Wk decreases. Therefore, the transfer function of transferring the shape of target object Wk by the pins is lost, and the supporting force is reduced. That is, in a case of using end effector 2 in a transverse manner, in an upward manner, or the like, it is difficult to maintain the force of supporting the target object. The following second exemplary embodiment describes end effector 1 capable of maintaining the force of supporting the target object even when being used in a transverse manner, in an upward manner, or the like.

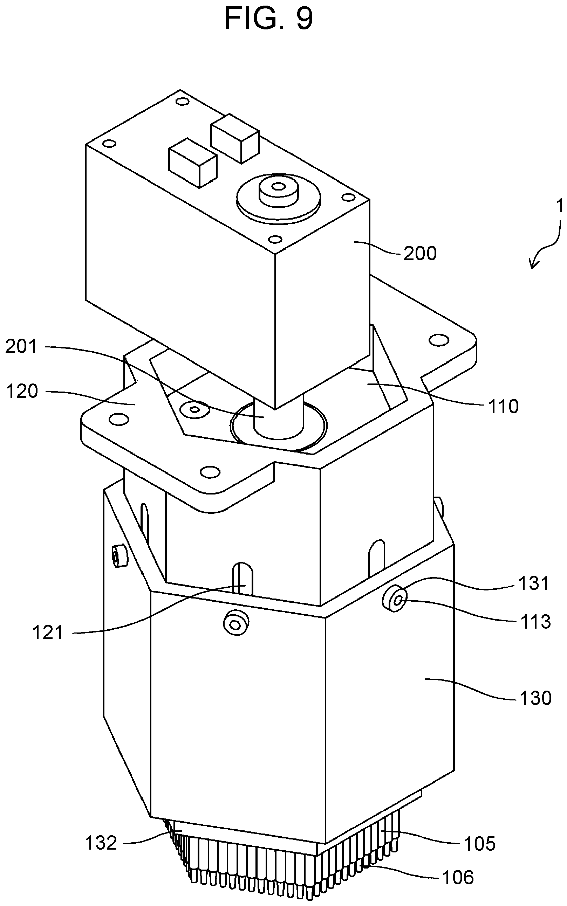

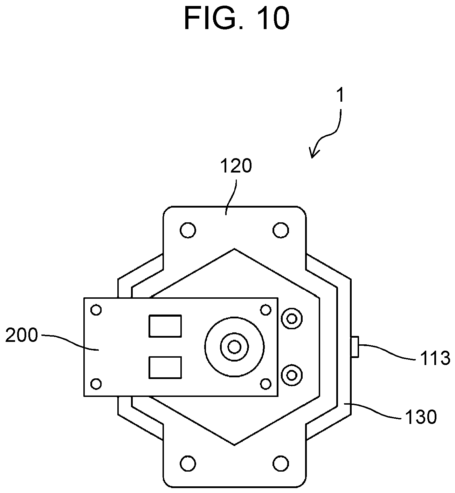

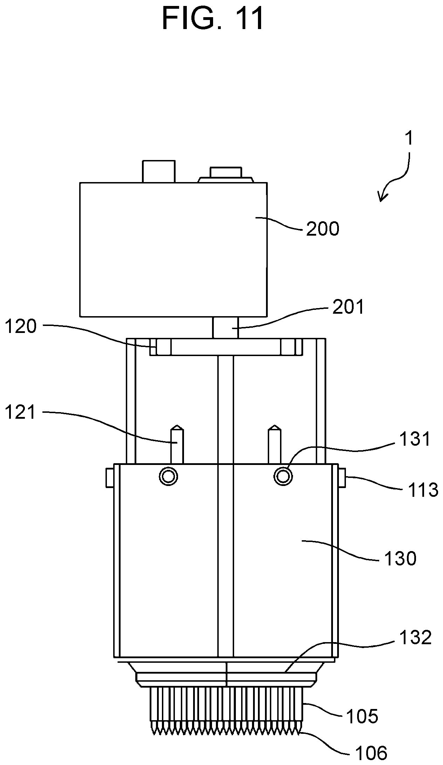

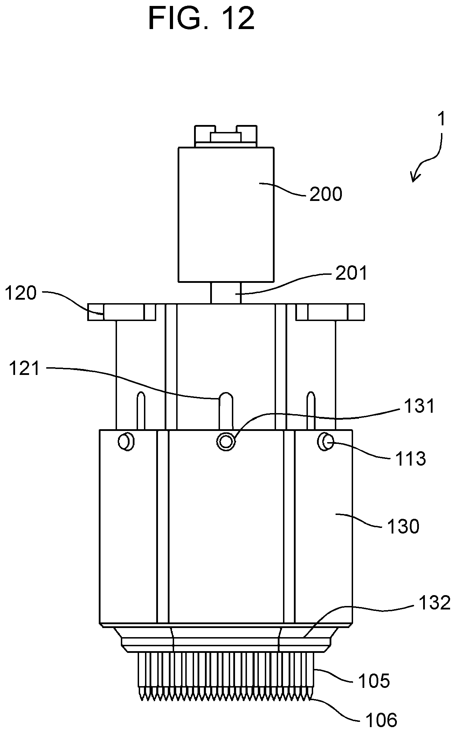

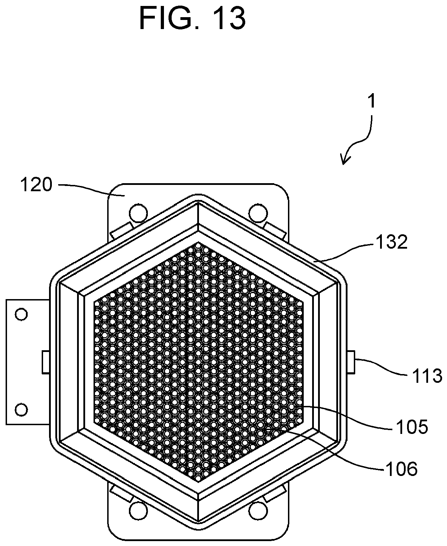

Fig. 9 is a perspective view illustrating an example of a configuration of end effector 1 according to a second exemplary embodiment of the present disclosure. Fig. 10 is a top view illustrating an example of the configuration of end effector 1 according to the second exemplary embodiment of the present disclosure. Fig. 11 is a front view illustrating an example of the configuration of end effector 1 according to the second exemplary embodiment of the present disclosure. Fig. 12 is a lateral view illustrating an example of the configuration of end effector 1 according to the second exemplary embodiment of the present disclosure. Fig. 13 is a bottom view illustrating an example of the configuration of end effector 1 according to the second exemplary embodiment of the present disclosure. Hereinafter, a configuration example of end effector 1 according to the second exemplary embodiment of the present disclosure will be described with reference to Fig. 9 to Fig. 13.

End effector 1 according to the second exemplary embodiment of the present disclosure includes catch base 120 and catch holder 130. Catch base 120 and catch holder 130 each have a tubular shape. In the present exemplary embodiment, catch base 120 and catch holder 130 are each formed into a tubular shape having a substantially hexagonal cross-sectional shape. However, the cross-sectional shape is not limited to a substantially hexagonal shape, and may be, for example, a substantially quadrangular shape or the like. Catch base 120 is inserted into the recess of catch holder 130. Catch bracket 110 to be described later is inserted into catch base 120.

Catch holder 130 is provided with bolt hole 131 through which bolt 113 passes. Catch base 120 is provided with slide groove 121 through which bolt 113 passes. Bolt 113 passes through bolt hole 131 and slide groove 121 and is fastened into a bolt hole provided in catch bracket 110.

Diaphragm 132 is provided at an end portion, of catch holder 130, on a side close to the tip ends of outer pins 105 and inner pins 106. Diaphragm 132 like catch holder 130 has a substantially hexagonal cross-sectional shape. Diaphragm 132 has a tapered shape. That is, the diameter of the cross section of diaphragm 132 having a substantially hexagonal shape gradually decreases from the side far from the tip ends of outer pins 105 and inner pins 106 toward the side close thereto. This tapered portion can be interpreted as an inclined portion.

A plurality of outer pins 105 and a plurality of inner pins 106 disposed inside outer pins 105 project from the inside of diaphragm 132.

Motor 200 is connected to end effector 1. Motor 200 includes feed bolt 201. Feed bolt 201 is inserted into catch bracket 110.

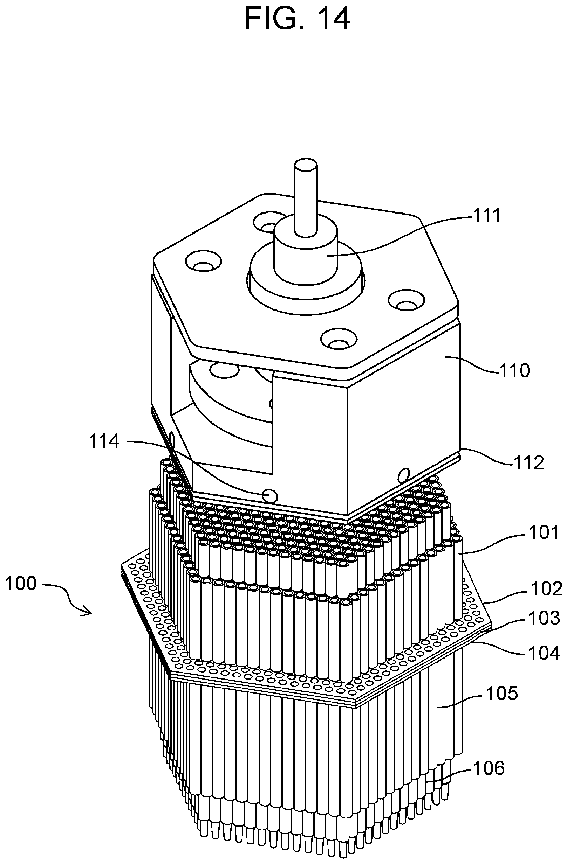

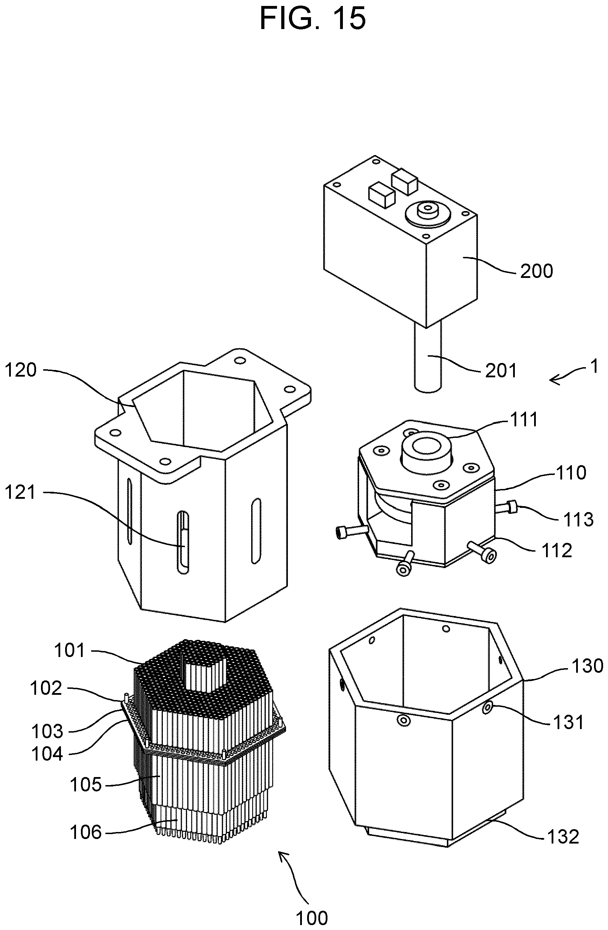

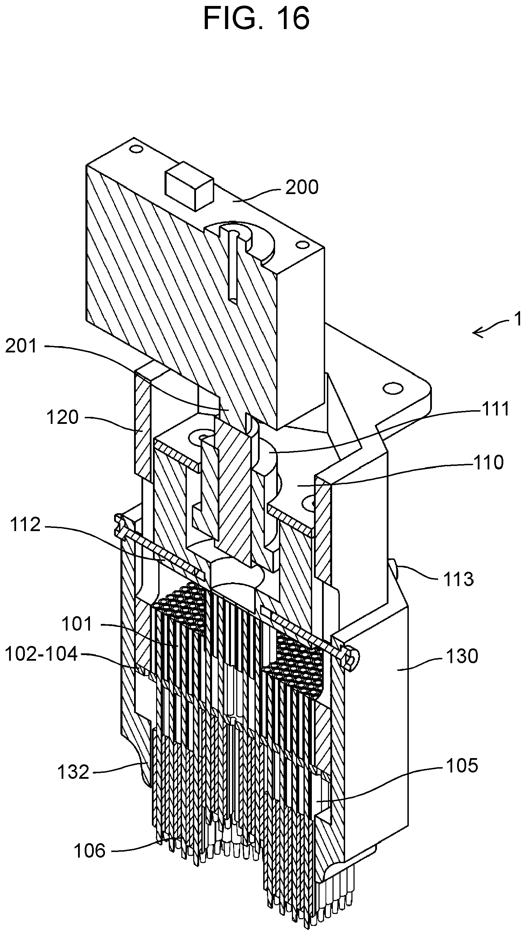

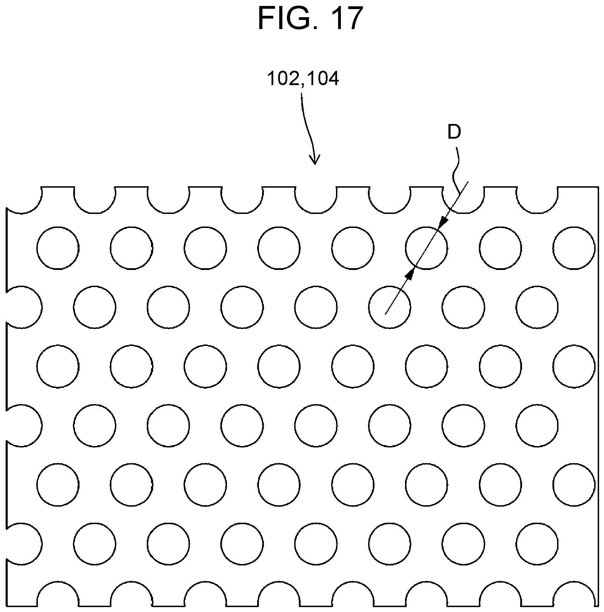

Fig. 14 is a perspective view illustrating an inner configuration of end effector 1 according to the second exemplary embodiment of the present disclosure. Fig. 15 is an exploded perspective view illustrating the inner configuration of end effector 1 according to the second exemplary embodiment of the present disclosure. Fig. 16 is a cross-sectional view illustrating the inner configuration of end effector 1 according to the second exemplary embodiment of the present disclosure. Fig. 17 is a conceptual diagram illustrating a mounting example of a hole plate. The internal configuration of end effector 1 according to the second exemplary embodiment of the present disclosure will be described with reference to Fig. 14 to Fig. 17.

Pin module 100 and catch bracket 110 are inserted into catch base 120 and catch holder 130 of end effector 1.

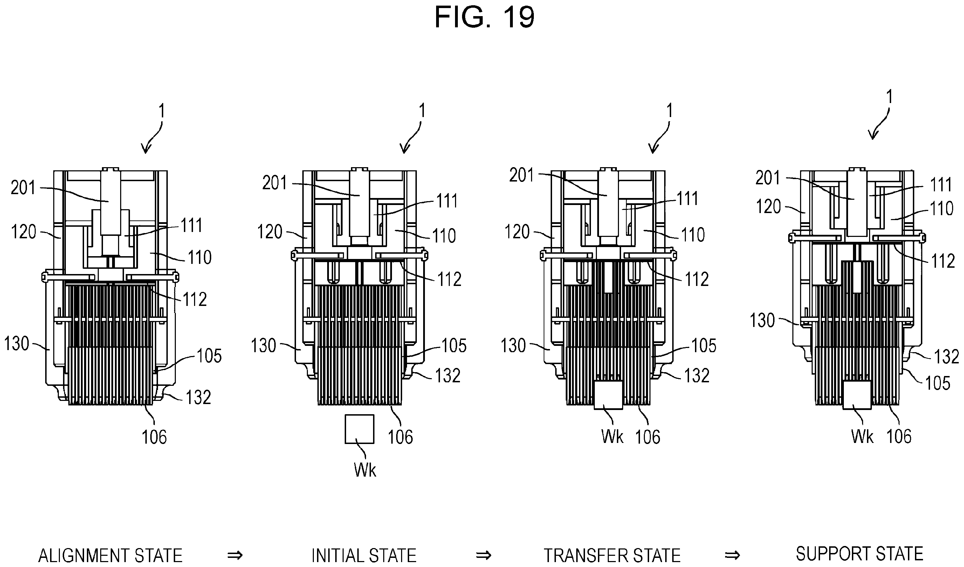

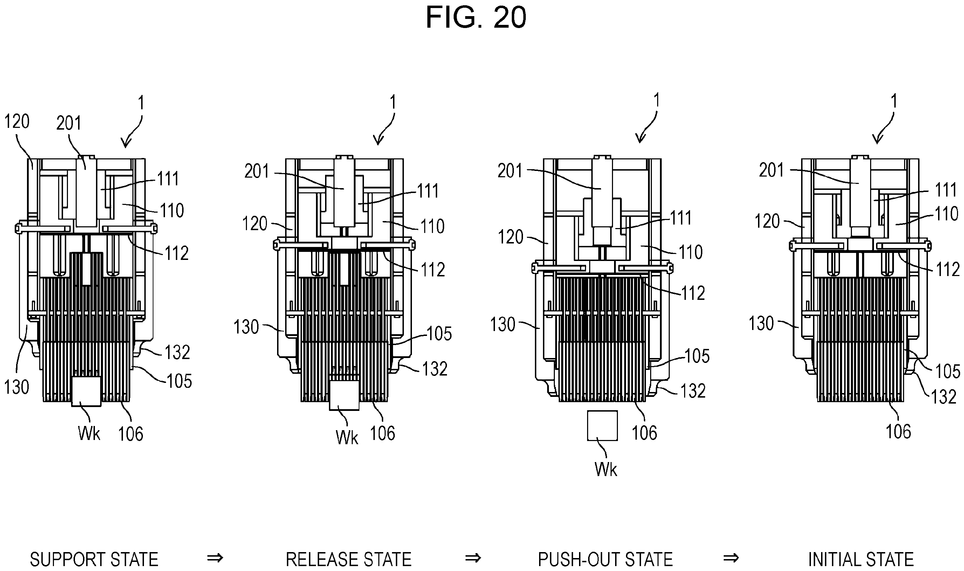

Catch bracket 110 is inserted into catch base 120 so as to be slidable in a direction of a tube formed by catch base 120. A spring mechanism (not illustrated) is incorporated in catch base 120. Therefore, in a case of receiving no external force, catch bracket 110 is positioned in an initial state described later with reference to Fig. 19 and Fig. 20, inside catch base 120.

Catch bracket 110 includes feed bolt receiver 111, pin push-out plate 112, and bolt hole 114. Feed bolt 201 of motor 200 is inserted into feed bolt receiver 111. Pin push-out plate 112 comes into contact with inner pins 106 included in pin module 100 to be described later, in accordance with the position of catch bracket 110 inside catch base 120 so as to push inner pins 106. Bolt 113 passing through bolt hole 131 and slide groove 121 is pushed into bolt hole 114.

Motor 200 rotates feed bolt 201. Therefore, motor 200 adjusts how deep feed bolt 201 is inserted into feed bolt receiver 111. Accordingly, motor 200 plays a role of adjusting a relative position of catch bracket 110 with respect to catch base 120 (a position in the direction of a tube formed by catch base 120).

Besides, a relative position between catch bracket 110 and catch holder 130 is fixed by bolt 113. On the other hand, since bolt 113 passes through slide groove 121 of catch base 120, the relative position of catch bracket 110 with respect to catch base 120 is not fixed. Therefore, motor 200 plays a role of also adjusting the position of catch holder 130 with respect to catch base 120.

Pin module 100 includes sleeve 101, hole plate 102, cushion material 103, hole plate 104, a plurality of outer pins 105, and a plurality of inner pins 106.

Hole plates 102, 104 and cushion material 103 will be described. The hole plate is a plate provided with a plurality of holes, and is also referred to as a punch plate. Fig. 17 shows one example of the punch plate. The arrangement of the plurality of holes provided in hole plates 102, 104 may be a staggered arrangement. However, there is no intention to exclude aspects including the other arrangements. Cushion material 103 is sandwiched between hole plate 102 and hole plate 104. By sandwiching cushion material 103 between two hole plates 102, 104, cushion material 103 does not peel off from the hole plate during the operation of end effector 1. Therefore, end effector 1 can stably hold cushion material 103.

Next, outer pins 105 and inner pins 106 will be described. The plurality of outer pins 105 are disposed near the outer peripheries of hole plates 102, 104. Outer pins 105 may be disposed near the outer peripheries of hole plates 102, 104 so as to draw a cross-sectional shape similar to the transverse cross-sectional shape of catch base 120. In the illustrated second exemplary embodiment, the plurality of outer pins 105 are arranged so as to draw a hexagon. A large number of inner pins 106 are disposed inside outer pins 105.

The plurality of outer pins 105 pass through the holes provided in hole plate 102, cushion material 103, and the holes provided in hole plate 104. Note that hole plate 102, cushion material 103, and hole plate 104 are collectively presented as a hole plate unit. Outer pin 105 has a first end and a second end opposite to the first end. The first end of outer pin 105 is an end on a side where outer pin 105 projects in a direction in which contact is made with target object Wk from the hole plate unit in a state where outer pin 105 passes through the hole plate unit. The second end of outer pin 105 is an end on a side where outer pin 105 projects in a direction opposite to the direction in which contact is made with target object Wk from the hole plate unit in a state where outer pin 105 passes through the hole plate unit. At this time, sleeve 101 is attached to the side of the second end of outer pin 105. In other words, sleeve 101 is attached to the side of an end portion opposite to an end portion on the side where contact is made with target object Wk supported by end effector 1.

The plurality of inner pins 106 pass through the holes provided in hole plate 102, cushion material 103, and the holes provided in hole plate 104. Inner pin 106 has a first end and a second end opposite to the first end. The first end of inner pin 106 is an end on a side where inner pin 106 projects in a direction so as to be contactable with target object Wk from the hole plate unit in a state where inner pin 106 passes through the hole plate unit. The second end of inner pin 106 is an end on a side where inner pin 106 projects in a direction opposite to the direction to be contactable with target object Wk from the hole plate unit in a state where inner pin 106 passes through the hole plate unit. At this time, sleeve 101 is attached to the side of the second end of inner pin 106. In other words, sleeve 101 is attached to the side of an end portion opposite to an end portion on the side where contact is made with target object Wk supported by end effector 1.

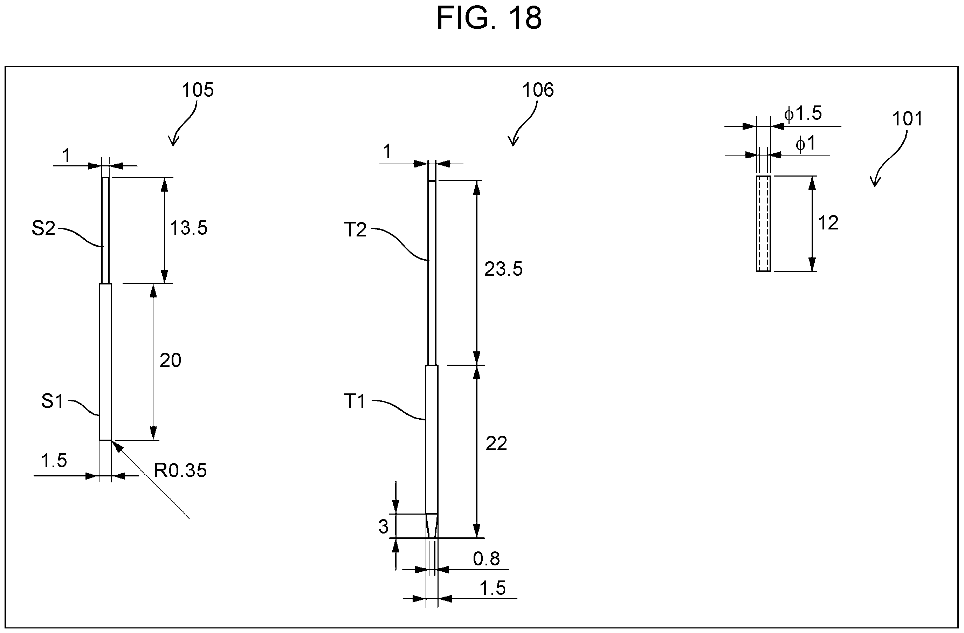

Fig. 18 is a comparison view of outer pin 105, inner pin 106, and sleeve 101 according to the second exemplary embodiment of the present disclosure.

In Fig. 18, the dimensions of outer pin 105, inner pin 106, and sleeve 101 are illustrated in units of millimeters only as an example. Naturally, a person skilled in the art may configure outer pin 105, inner pin 106, and sleeve 101 with dimensions different from those illustrated. Fig. 18 illustrates first portion S1 that is a portion on the side where the first end of outer pin 105 is located and second portion S2 that is a portion on the side where the second end thereof is located. Fig. 18 also illustrates first portion T1 that is a portion on the side where the first end of inner pin 106 is located and second portion T2 that is a portion on the side where the second end thereof is located.

The diameter (1 mm in the example of Fig. 18) of second portion S2 of outer pin 105 is smaller than the diameter (1.5 mm in the example of Fig. 18) near first portion S1. Besides, hole diameter D of hole plates 102, 104 illustrated in Fig. 17 is equal to or larger than the diameter of second portion S2 and smaller than the diameter of first portion S 1. Therefore, it is possible to allow second portion S2 of outer pin 105 to pass through the hole plate unit. A step is provided, at a position where the diameter increases, between second portion S2 and first portion S 1. The step comes into contact with a portion, of hole plate 104, other than the holes. As a result, further movement of outer pin 105 with respect to the hole plate is restricted.

The diameter (1 mm in the example of Fig. 18) of second portion T2 of inner pin 106 is smaller than the diameter (1.5 mm in the example of Fig. 18) near first portion T1. Besides, hole diameter D of hole plates 102, 104 illustrated in Fig. 17 is equal to or larger than the diameter of second portion T2 and smaller than the diameter of first portion T 1. Therefore, it is possible to allow second portion T2 of inner pin 106 to pass through the hole plate unit. A step is provided, at a position where the diameter increases, between second portion T2 and first portion T1. The step comes into contact with a portion, of hole plate 104, other than the holes. As a result, further movement of inner pin 106 with respect to hole plate 104 is restricted.

Sleeve 101 is formed in a hollow tubular shape. The inner diameter of sleeve 101 corresponds to the diameters of second portions S2 and T2. The outer diameter of sleeve 101 may correspond to the diameters of first portions S1 and T 1. The diameter of sleeve 101 may be larger than the hole diameter of hole plate 102. Note that sleeve 101 is attached to second portion T2 of inner pin 106. Therefore, sleeve 101 can also function as a stopper that prevents inner pins 106 from falling off from the hole plate unit. In this case, a distance obtained by subtracting the thickness of the hole plate unit from a distance between the step in inner pin 106 and sleeve 101 is a distance by which inner pin 106 is movable, that is, a first distance.

Fig. 19 is a conceptual diagram illustrating a flow until end effector 1 according to the second exemplary embodiment of the present disclosure supports target object Wk. Fig. 20 is a conceptual diagram illustrating a flow until end effector 1 according to the second exemplary embodiment of the present disclosure releases supported target object Wk and returns to an initial state. Note that since the components in Fig. 19 and Fig. 20 are the same as those illustrated in Fig. 9 to Fig. 18, only some of the components are explicitly illustrated with the same reference numerals, and the reference numerals for the other components are omitted. In addition, a description will be given on the assumption that the tip ends of the plurality of pins included in end effector 1 face the gravity direction.

In the alignment state illustrated in Fig. 19, catch bracket 110 slides downward in the drawing with respect to catch base 120 under the control of motor 200. As a result, pin push-out plate 112 pushes the second ends of inner pins 106 and aligns inner pins 106 such that the second ends of the inner pins are aligned at the same height.

Next, catch bracket 110 returns to a predetermined position (height) with respect to catch base 120 by a spring mechanism (not illustrated) provided in catch bracket 110. Inner pins 106 maintain the aligned state. Such a state of end effector 1 is an initial state.

In the transfer state, end effector 1 is pressed against target object Wk. This pressing may be performed by a human, or may be performed by a robot arm having end effector 1 attached thereto. Among the plurality of inner pins 106, an inner pin that has come into contact with target object Wk slides upward with respect to the hole plate unit.

In the support state, catch bracket 110 slides upward in Fig. 19 with respect to catch base 120 under the control of motor 200. Catch holder 130 fixed to catch bracket 110 also slides upward with respect to catch base 120. As a result, the inclined portion on the inner wall of diaphragm 132 comes into contact with outer pins 105 and applies an inward force (that is, a force toward target object Wk) to outer pins 105. Due to this inward force, as outer pins 105 fall inward, inner pins 106 disposed further inside accordingly fall inward sequentially, and inner pins 106 coming into contact with target object Wk are finally pressed against the lateral surface of target object Wk. The plurality of inner pins 106 coming into contact with target object Wk apply the lateral pressure to target object Wk, thereby supporting target object Wk.

Next, a description will be given with reference to Fig. 20. Since the support state illustrated in Fig. 20 is the same as the support state illustrated in Fig. 19, a detailed description thereof will be omitted.

In the release state, the biasing force in the rotation direction applied to feed bolt 201 by motor 200 is turned off. That is, feed bolt 201 is freely rotatable. Then, feed bolt 201 is rotated by the return force of a spring of the spring mechanism provided in catch bracket 110, and catch bracket 110 slides downward in Fig. 20 with respect to catch base 120. Catch holder 130 fixed to catch bracket 110 also slides downward with respect to catch base 120. Consequently, outer pins 105 are released from the inward force applied by diaphragm 132. Accordingly, inner pins 106 disposed further inside are also released from the inward force. Once the lateral pressure which has been applied to target object Wk by the plurality of inner pins 106 coming into contact with target object Wk disappears, target object Wk is released from inner pins 106.

In the push-out state, catch bracket 110 further slides downward in Fig. 20 with respect to catch base 120 due to the reaction of the spring with the spring mechanism provided in catch bracket 110. As a result, pin push-out plate 112 pushes the second ends of inner pins 106 and aligns inner pins 106 such that the second ends of inner pins 106 are aligned at the same height. That is, in the push-out state in Fig. 20, inner pins 106 are aligned similarly to the alignment state in Fig. 19. At this time, target object Wk is pushed out by inner pins 106.

Catch bracket 110 returns to a predetermined position (height) with respect to catch base 120 by the spring mechanism provided in catch bracket 110. Inner pins 106 maintain the aligned state. That is, a state of end effector 1 returns to an initial state.

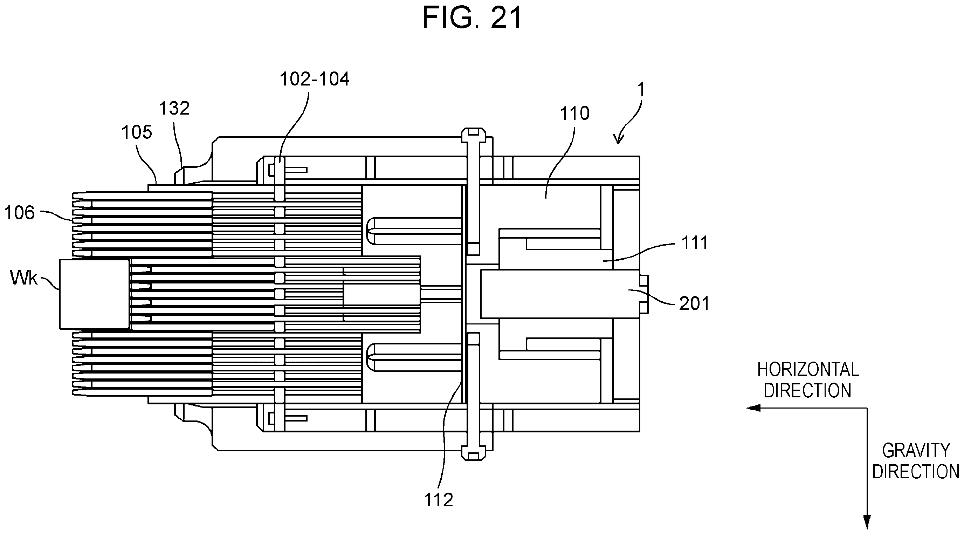

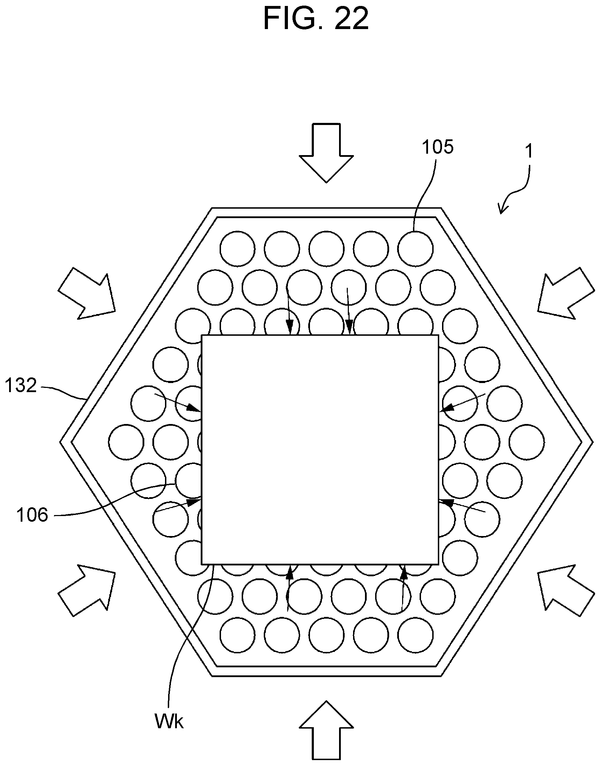

Fig. 21 is a longitudinal sectional view illustrating an example of end effector 1 in a support state. Fig. 22 is a conceptual diagram illustrating a case where end effector 1 supports target object Wk in the horizontal direction, corresponding to Fig. 21.

Fig. 22 is a view of end effector 1 in a support state as viewed in a direction from target object Wk toward end effector 1. In Fig. 21 and Fig. 22, as the examples in Fig. 7 and Fig. 8, the direction of the own weights applied to outer pins 105 and inner pins 106 is different from the direction in which the pins extend. Therefore, a force other than a force of the contact with target object Wk is applied to inner pins 106. However, in the case of end effector 1 according to the second exemplary embodiment, inner pins 106 pass through cushion material 103 as described above. Thus, cushion material 103 serves as a resistance to prevent inner pins 106 from unintentionally sliding. Therefore, as indicated in Fig. 22, the number of inner pins 106 supporting target object Wk does not decrease. Accordingly, the transfer function of transferring the shape of target object Wk by the pins is not lost, and the supporting force is not reduced. The same applies to a case where end effector 1 supports target object Wk in another direction, for example, in the upward direction. Cushion material 103 through which inner pins 106 pass, exerts a resistance force against the sliding movement of inner pins 106, which also makes it possible to prevent inner pins 106 from unintentionally falling. That is, it is possible to obtain end effector 1 in which the support force does not decrease even if end effector 1 is directed in any direction, for example, the lateral direction or the upward direction. With end effector 1 according to the second exemplary embodiment of the present disclosure that has been discussed above, a wide range of work can be performed. For example, end effector 1 can perform on and off control by pinching a switch provided on a wall. End effector 1 can grip and rotate a door knob to open a door. In addition, end effector 1 can rotate a naked electric bulb disposed on the ceiling in a room to remove the naked electric bulb.

Sleeve 101 having an appropriate thickness is attached to at least inner pins 106 of outer pins 105 and inner pins 106. Once sleeve 101 is attached, inner pins 106 are aligned with no gap at a position where sleeve 101 is attached. In addition, it is possible to avoid a case where inner pin 106 is obliquely displaced with respect to the holes of hole plates 102, 104 and is caught by another pin. Therefore, even if end effector 1 is used in any direction (for example, the lateral direction or the upward direction), inner pins 106 can correctly transfer the shape of target object Wk. Accordingly, end effector 1 can firmly support target object Wk.

Here, cushion material 103, outer pin 105, diaphragm 132, and inner pin 106 will be described in more detail.

### (Cushion material)

Cushion material 103 prevents inner pin 106 which has received an unintended force other than a force received from target object Wk from sliding. From this viewpoint, cushion material 103 is formed of a material capable of applying a frictional force to inner pins 106 which pass through cushion material 103. Cushion material 103 may be formed of, for example, urethane foam, but the material is not limited thereto. Cushion material 103 has elasticity. The hole diameter of cushion material 103 through which inner pin 106 passes, is preferably smaller than the diameter of inner pin 106.

### (Outer pin and diaphragm)

Outer pin 105 is fixed to hole plate 104 so as not to slide in a direction of a hole in hole plate 104. Outer pin 105 is shorter than inner pin 106. When a movable range (stroke) of inner pin 106 in the direction of the hole in hole plate 104 is regarded as a first distance, outer pin 105 has a length less than or equal to a value obtained by subtracting the first distance from the length of inner pin 106.

The first end of outer pin 105, that is, an end portion on the side closer to target object Wk supported by end effector 1, has a rounded shape. Such a rounded shape prevents the inner wall (inclined portion) of diaphragm 132 sliding together with catch bracket 110 and the first end of outer pin 105 from wearing each other when contact is made therebetween. For example, the first end of outer pin 105 may be spherical. From the viewpoint of preventing the wear, the inner wall (inclined portion) of diaphragm 132 may have a rounded shape. Note that diaphragm 132 is one aspect of the force application portion.

Since the first end of outer pin 105 or the inner wall (inclined portion) of diaphragm 132 has a rounded shape, the inner wall (inclined portion) of diaphragm 132 smoothly transmits the inward force to outer pin 105 when diaphragm 132 of catch holder 130 slides in the direction of the hole in hole plate 104 and a state shifts from the transfer state to the support state as illustrated in Fig. 19. Outer pins 105 fall smoothly inward, and inner pins 106 disposed further inside applies the lateral pressure smoothly to target object Wk. Accordingly, end effector 1 can smoothly support target object Wk.

### (Inner pin)

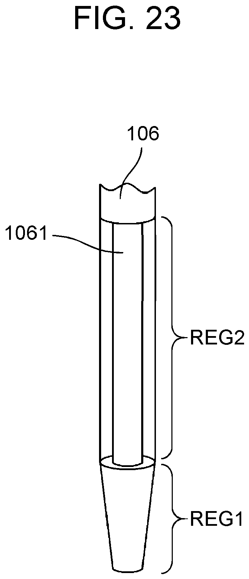

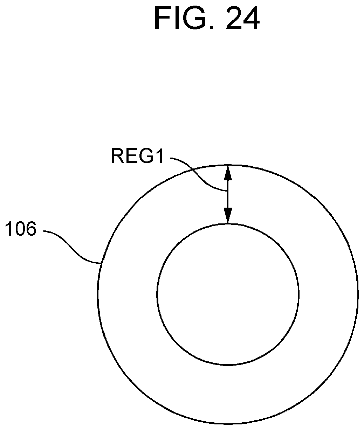

Fig. 23 is a conceptual diagram illustrating an example of the shape of inner pin 106 in the vicinity of a first end. Fig. 24 is a conceptual view of inner pin 106 illustrated in Fig. 23 as viewed in a direction from the first end to a second end. First region REG1 including the first end, of a region in contact with target object Wk, in first portion T1 (see Fig. 18) of inner pin 106 is processed to be tapered. As a result, as compared with a case where the end portion of inner pin 106 has a simple rod shape, the lateral surface portion of inner pin 106 that has fallen inward comes into contact with target object Wk more smoothly. Therefore, a lateral force is easily applied to target object Wk, and the support of target object Wk is stabilized. Even when target object Wk is small, it is possible to grasp target object Wk so as to surround target object Wk with the tapered portions of the plurality of inner pins 106. Fig. 24 illustrates one example indicating the inclination degree of the taper of first region REG1 to be set.

Second region REG2, of a region in contact with target object Wk, in first portion T1 (see Fig. 18) of inner pin 106 may be subjected to anti-slip processing. For example, in a case where target object Wk is a slippery object such as a flounder or a sea cucumber, in the first place, it is difficult for the end effector to support such an object. End effector 1 according to the second exemplary embodiment of the present disclosure can reliably support a slippery object by receiving anti-slip processing such that a portion to be caught is formed in second region REG2. This anti-slip processing is performed, for example, such that the peripheral portion of core 1061 is processed into a shape in which a frictional force increases, with core 1061, that is a central portion of second region REG2, being left unprocessed.

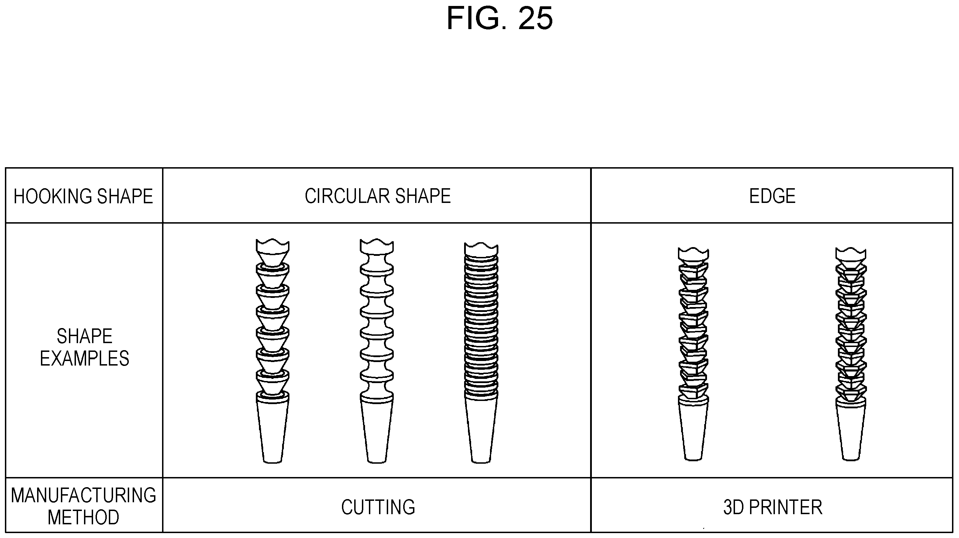

Fig. 25 is a view illustrating an example of anti-slip processing performed on second region REG2 of inner pin 106. In a case where the shape to be caught (hooking shape) is formed as, for example, a cylinder, the surface shape of second region REG2 is formed by leaving core 1061 unprocessed and cutting the peripheral portion thereof. In a case where the hooking shape is formed as a shape having an edge, the surface shape of second region REG2 is formed, for example, by forming inner pins 106 per se by using a 3D printer.

Alternatively, a portion of second region REG2 of inner pins 106 may be cut while leaving core 1061 unprocessed and then, a rubber anti-slip member may be attached around core 1061.

Note that the individual components explained in conjunction with end effector 1 according to the second exemplary embodiment of the present disclosure may be applied to end effector 2 according to the first exemplary embodiment of the present disclosure, and the operation and effect similar to those described above can be obtained.

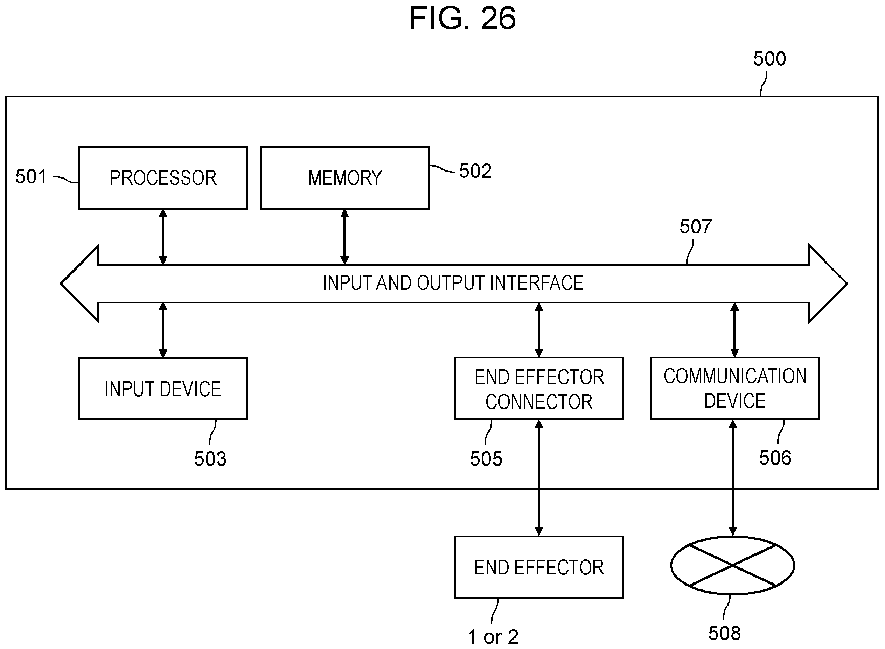

Fig. 26 is a block diagram illustrating an example of a hardware configuration of control system 500 used together with the end effector according to each exemplary embodiment of the present disclosure. Control system 500 controls the operation of end effector 1 or end effector 2 described above. Note that control system 500 may further control a robot arm (not illustrated). Control system 500 may be provided inside the robot arm or may be provided outside the robot arm.

Control system 500 includes processor 501, memory 502, input device 503, end effector connector 505, communication device 506, and input and output interface 507. Memory 502, input device 503, end effector connector 505, communication device 506, and input and output interface 507 are each connected to processor 501 by an internal bus or the like so as to ensure inputting and outputting of data or information.

Processor 501 functions as a control unit of control system 500. For example, processor 501 performs control processing for comprehensively integrating operations of various portions of control system 500, data or information input and output processing among various portions of control system 500, data calculation processing, and data or information storage processing. Furthermore, processor 501 functions also as a control unit that controls end effector 1, end effector 2, and the robot arm. Processor 501 may, for example, control the operation of actuator 16 for end effector 2 or motor 200 for end effector 1. Processor 501 may be a central processing unit (CPU), a micro processing unit (MPU), a digital signal processor (DSP), or a field programmable gate array (FPGA).

Memory 502 stores various programs (an operating system (OS), application software, etc.) to be executed by processor 501, and various data. Memory 502 includes, for example, a hard disk drive (HDD), a flash memory, a read only memory (ROM), and/or a random access memory (RAM).

Input device 503 has a function as a human interface with respect to a user and receives a manipulation input from the user. In other words, input device 503 is used for giving an input or an instruction for various kinds of processing performed by control system 500. An example of input device 503 is a keyboard or a mouse. Alternatively, input device 503 is a programming pendant connected to a controller (not illustrated) of the robot arm.

End effector connector 505 is a device for connecting end effector 1 or end effector 2 to control system 500. End effector connector 505 and end effector 1 or end effector 2 are connected by a wire such as a connector and a cable. However, end effector connector 505 and end effector 1 or end effector 2 may be wirelessly connected.

Communication device 506 is a device for communicating with the outside via network 508. This communication may be wired communication or wireless communication.

Input and output interface 507 has a function as an interface through which data or information is input or output among devices that configure control system 500.

Note that the configuration of control system 500 illustrated in Fig. 26 is an example, and control system 500 may not include some of the components illustrated in Fig. 26 or may further include additional components not illustrated in Fig. 26.

### (Modification of first exemplary embodiment)

The configuration of end effector 2 according to the first exemplary embodiment of the present disclosure is not limited to the above configuration. For example, projection 14B of holder 14 may be formed of an air tube, and the air tube may be disposed above the lower ends of outer pins 12A. In this case, end effector 2 injects air into the air tube in the support stage. As a result, the air tube expanded by the injection of air presses outer pins 12A from the lateral surface and applies an inward force (that is, a force toward target object Wk) to outer pins 12A. Due to this inward force, as outer pins 12A fall inward, inner pins 12B accordingly fall inward sequentially, and inner pins 12B coming into contact with target object Wk are finally pressed against the lateral surface of target object Wk. Even with such a configuration, end effector 2 can support target object Wk. The air tube is one aspect of the force application portion.

Alternatively, end effector 2 may be configured to include outer pin 12A made of a shape memory alloy whose tip end portion is deformed inward (that is, toward target object Wk) when electric current flows therethrough, instead of including holder 14. In this case, end effector 2 flows electric current through outer pins 12A in the support stage. Accordingly, as outer pins 12A are deformed inward, inner pins 12B accordingly fall inward sequentially, and inner pins 12B coming into contact with target object Wk are finally pressed against the lateral surface of target object Wk. Even with such a configuration, end effector 2 can support target object Wk. A device that flows electric current through outer pins 12A is one aspect of the force application portion.

Next, end effector 2 that supports a switching adapter will be explained. In the above first exemplary embodiment, target object Wk supported by end effector 2 is, for example, a workpiece to be picked in a factory or the like. On the other hand, end effector 2 may support another end effector. One example of such another end effector is switching adapter 33 described later.

Hereinafter, end effector 2 that supports and uses switching adapter 33 including adsorption pad 32 capable of adsorbing target object Wk will be explained.

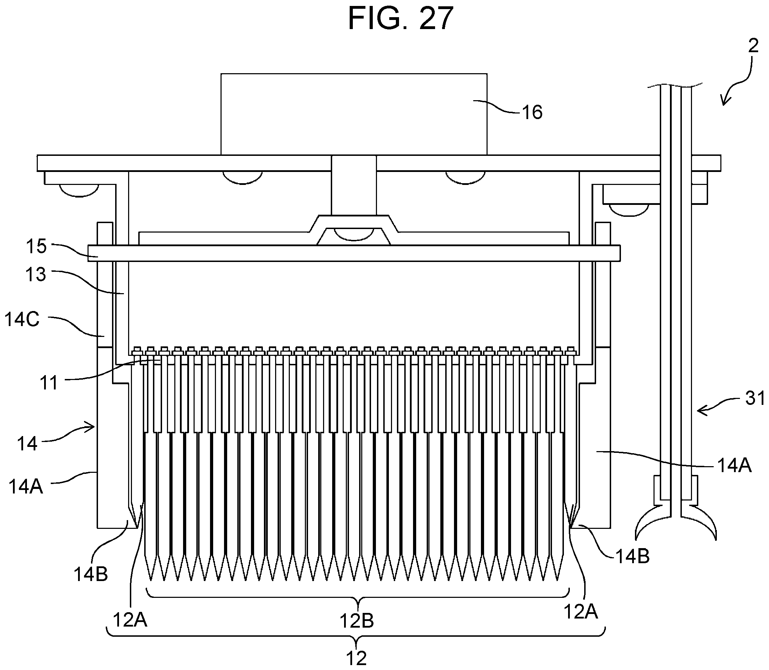

Fig. 27 is a longitudinal sectional view illustrating an example of a configuration of end effector 2 according to a modification.

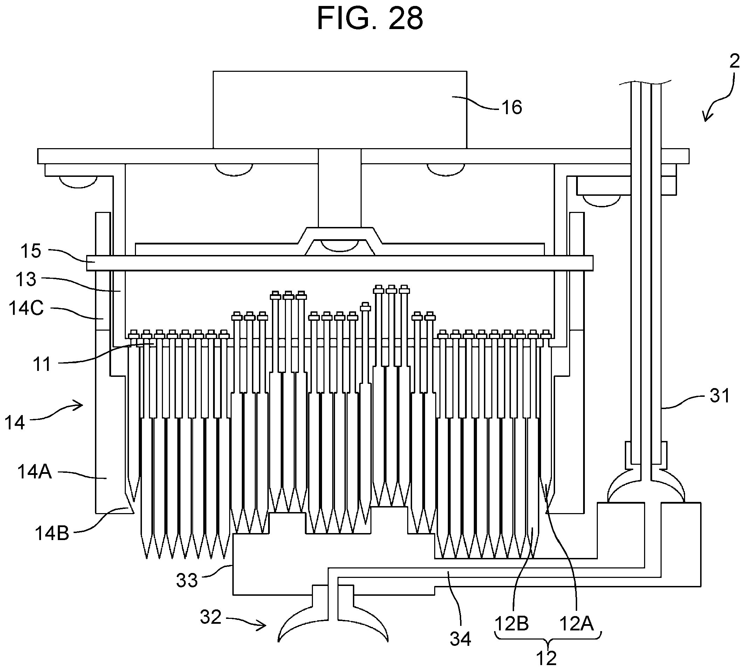

End effector 2 further includes main body adsorption unit 31. Main body adsorption unit 31 can be coupled to adsorption pad 32 described with reference to Fig. 28 and constitutes a path for sucking and discharging air with respect to coupled adsorption pad 32.

Note that when actuator 16 sucks and discharges air, main body adsorption unit 31 may be connected to an air conveyance system common to actuator 16.

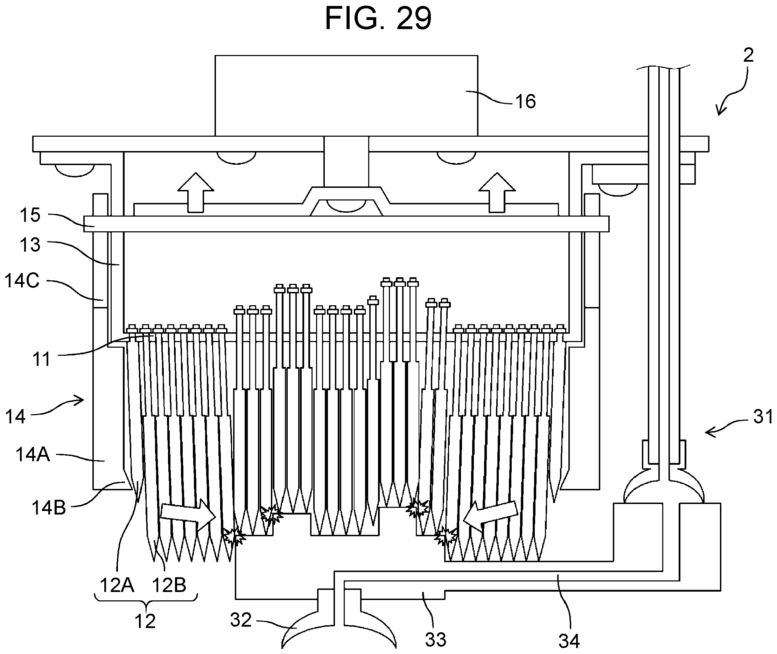

Fig. 28 is a longitudinal sectional view illustrating an example of a tracing stage of switching adapter 33 by end effector 2 according to the modification. Fig. 29 is a longitudinal sectional view illustrating an example of a support stage of switching adapter 33 by end effector 2 according to the modification.

First, as illustrated in Fig. 28, switching adapter 33 includes adsorption pad 32. Pipe 34 for sucking and discharging air into and from the adsorption pad is coupled to main body adsorption unit 31. This forms a path for sucking and discharging air from adsorption pad 32 to main body adsorption unit 31.

Next, as illustrated in Fig. 28, end effector 2 traces switching adapter 33 in the tracing stage. Then, as illustrated in Fig. 29, end effector 2 supports switching adapter 33 in the support stage.

As a result, end effector 2 can use adsorption pad 32 through supported switching adapter 33. That is, the robot arm can use another type of end effector such as adsorption pad 32 through switching adapter 33 without replacing pin-type end effector 2 according to the present disclosure.

Note that the other type of end effector attached to switching adapter 33 is not limited to adsorption pad 32 described above. For example, an end effector of a finger type, an electromagnetic type, or a jamming type may be attached to switching adapter 33.

Note that respective components explained for the modification of the first exemplary embodiment may be applied to end effector 1 according to the second exemplary embodiment of the present disclosure, and the operation and effect similar to those described above can be obtained.

As described above, the end effector according to one aspect of the present disclosure includes one or more hole plates each including a plurality of holes, a cushion material to be used together with the hole plate, and a plurality of pins. The plurality of pins include a plurality of inner pins and a plurality of outer pins surrounding outside of the inner pins. The inner pins pass through the holes of the hole plate and the cushion material so as to be movable within a first distance in the pass-through direction of the holes with respect to the hole plate. The end effector further includes a force application portion that applies a force directed toward the inner pins on inside to the outer pins. As a result, it is possible to provide an end effector capable of maintaining the force of supporting the target object even when being used in a transverse manner, in an upward manner, or the like.

The outer pin is fixed so as not to move in a pass-through direction of the holes in the hole plate with respect to the one or more hole plates. As a result, the fixed outer pin falls inward, thereby applying an inward force can be applied to the inner pin.

The outer pins have a length less than or equal to a value obtained by subtracting the first distance from a length of the inner pins. As a result, it is possible to secure a movable range (stroke) in which the inner pins move in the direction of the holes of the hole plate.

A sleeve is attached to a side of end portions, of the plurality of pins, opposite to end portions on a side where contact is made with the target object supported by the end effector. As a result, the inner pins are aligned with no gap at a position where the sleeve is attached. In addition, it is possible to avoid a case where the inner pins are obliquely displaced with respect to the holes of the hole plate and is caught by another pin. Therefore, even if the end effector is used in any direction (for example, the lateral direction or the upward direction), the inner pins can correctly transfer the shape of the target object. Accordingly, the end effector can firmly support the target object.

The end portions, of the inner pins, on the side where contact is made with the target object supported by the end effector have a tapered shape. As a result, as compared with a case where the end portions of the inner pins have a simple rod shape, lateral surface portions of the inner pins that have fallen inward comes into contact with target object more smoothly. Therefore, a lateral force is easily applied to the target object, and the support of the target object is stabilized. Even when the target object is small, it is possible to grasp the target object so as to surround the target object with the tapered portions of the plurality of inner pins.

Anti-slip processing is performed on a region, of the inner pin, where contact is made with the target object supported by the end effector. As a result, it is possible to reliably hold a slippery object.

A end portion, of each of the outer pins, on a side where contact is made with the target object supported by the end effector has a rounded shape. As a result, it is possible to prevent wear due to contact between the end portion and the force application portion.

The force application portion includes an inclined portion movable along the pass-through direction of the holes in the hole plate, and the inclined portion has a rounded shape. As a result, it is possible to prevent wear due to contact between the end portion, of the outer pin, on the side where contact is made with the target object supported by the end effector, and the force application portion (inclined portion).

The cushion material may be disposed while being sandwiched between two hole plates. As a result, the cushion material is stably held by the two hole plates.

An end effector set includes the end effector described above and another end effector supportable by the end effector described above. This makes it possible to perform work while supporting the other end effector without replacing the end effector described above.

The exemplary embodiments have been described above with reference to the accompanying drawings, but the present disclosure is not limited to the above examples. It is obvious that those skilled in the art can conceive various changes, modifications, substitutions, additions, deletions, and equivalents within the scope described in the claims, and it is understood that such changes, modifications, substitutions, additions, deletions, and equivalents also belong to the technical scope of the present disclosure. In addition, the components in the above-mentioned exemplary embodiments may be arbitrarily combined without departing from the spirit of the present invention.

### INDUSTRIAL APPLICABILITY

The end effector according to the present disclosure is applicable to an apparatus for supporting an object.

### REFERENCE MARKS IN THE DRAWINGS

- 1: end effector
- 2: end effector
- 11: hole plate
- 12: pin
- 12A: outer pin
- 12B: inner pin
- 13: base
- 14: holder
- 14A: lateral surface portion
- 14B: projection
- 14C: slit
- 15: movable plate
- 16: actuator
- 31: main body adsorption unit
- 32: adsorption pad
- 33: switching adapter
- 34: pipe
- 100: pin module
- 101: sleeve
- 102: hole plate
- 103: cushion material
- 104: hole plate
- 105: outer pin
- 106: inner pin
- 1061: core
- 110: catch bracket
- 112: plate
- 113: bolt
- 114: bolt hole
- 120: catch base
- 121: slide groove
- 130: catch holder
- 131: bolt hole
- 200: motor
- 201: bolt
- 500: control system
- 501: processor
- 502: memory
- 503: input device
- 505: end effector connector
- 506: communication device
- 507: input and output interface
- 508: network
- Wk: target object

## Claims

1. An end effector comprising:
one or more hole plates each including a plurality of holes;
a cushion material to be used together with the one or more hole plates;
a plurality of pins including a plurality of inner pins and a plurality of outer pins disposed outside the plurality of inner pins; and
a force application portion that applies an inward force to the plurality of outer pins,
wherein the plurality of inner pins pass through the plurality of holes and the cushion material and are movable within a first distance in a pass-through direction of the plurality of holes with respect to the one or more hole plates.

2. The end effector according to Claim 1, wherein the plurality of outer pins are fixed so as not to move in the pass-through direction of the plurality of holes with respect to the one or more hole plates.

3. The end effector according to Claim 2, wherein the plurality of outer pins have a length less than or equal to a value obtained by subtracting the first distance from a length of the plurality of inner pins.

4. The end effector according to any one of Claim 1 to Claim 3, wherein a sleeve is attached to a side of end portions, of the plurality of pins, opposite to end portions on a side where contact is made with a target object supported by the end effector.

5. The end effector according to any one of Claim 1 to Claim 4, wherein end portions, of the plurality of inner pins, on the side where contact is made with the target object supported by the end effector each have a tapered shape.

6. The end effector according to any one of Claim 1 to Claim 5, wherein anti-slip processing is performed on a region, of each of the plurality of inner pins, where contact is made with the target object supported by the end effector.

7. The end effector according to any one of Claim 1 to Claim 6, wherein end portions, of the plurality of outer pins, on a side closer to the target object supported by the end effector each have a rounded shape.

8. The end effector according to any one of Claim 1 to Claim 7, wherein the force application portion includes an inclined portion movable along the pass-through direction of the plurality of holes, and the inclined portion has a rounded shape.

9. The end effector according to any one of Claim 1 to Claim 8, wherein
the one or more hole plates are two hole plates, and
the cushion material is disposed while being sandwiched between the two hole plates.

10. An end effector set comprising:
the end effector according to any one of Claim 1 to Claim 9; and
another end effector supportable by the end effector.
